# EUROPÄISCHE PATENTSCHRIFT

(11) **EP 2 608 988 B1**
(45) Veröffentlichungstag und Bekanntmachung des Hinweises auf die Patenterteilung: **06.04.2016**
(21) Anmeldenummer: 11748659.7
(22) Anmeldetag: 25.08.2011
(51) Int. Cl.: B60N 2/48

(54) **ARRETIERVORRICHTUNG FÜR EINE KOPFSTÜTZE**
LATCHING DEVICE FOR A HEAD RESTRAINT
DISPOSITIF DE BLOCAGE D'UN APPUI-TÊTE

(30) Priorität: 26.08.2010 DE 102010035429
(43) Veröffentlichungstag der Anmeldung: 03.07.2013
(73) Patentinhaber: Johnson Controls GmbH, 51399 Burscheid (DE)
(72) Erfinder: GOTTWALD, Martin, 51381 Leverkusen (DE); STRÁNSKY, Ján, 95701 Banovce n. B (SK); PTASINSKY, Mikulás, 08701 Giraltovce (SK); MARTINKA, Michael, 91501 Nove Mesto n. V (SK); SCHMITT, Daniel, F-67370 Reitweiler (FR); MICHALKA, Ralph, 40627 Düsseldorf (DE)
(74) Vertreter: Finger, Catrin
(86) Internationale Anmeldenummer: PCT/EP2011/064622
(87) Internationale Veröffentlichungsnummer: WO 2012/025586

(56) Entgegenhaltungen:
- EP-A1- 0 864 461
- DE-A1- 10 312 517
- DE-U1- 29 613 073
- US-A1- 2006 186 720

## Beschreibung

Die Erfindung betrifft eine Arretiervorrichtung für eine Kopfstütze und eine Kopfstütze für einen Fahrzeugsitz.

Aus dem Stand der Technik sind allgemein Fahrzeugsitze mit höhenverstellbaren Kopfstützen bekannt, die insbesondere in einem Frontbereich eines Fahrzeugs eingesetzt werden. Dabei dient die höhenverstellbare Kopfstütze dem Komfort eines Fahrzeuginsassen und der Vermeidung von Verletzungen bei Unfällen.

Aus der DE 10 2005 017 580 B3 ist eine Kopfstütze für einen Fahrzeugsitz bekannt, die einen Kopfstützenkörper aufweist, der bezüglich einer Kopfstützenstange höheneinstellbar ist. Zur Verriegelung des Kopfstützenkörpers mit der Kopfstützenstange ist ein schwenkbar gelagertes und vorgespanntes Verriegelungselement vorgesehen, das von einem Betätigungselement ansteuerbar ist. Das Verriegelungselement greift dazu in eine Kerbe der Kopfstützenstange.

Die DE 10 2005 033 343 B4 beschreibt die oben genannte Kopfstütze, wobei die Kopfstützenstangen derart ausgebildet sind, dass sie einen Ausgleich von Toleranzen und/oder Fehlern ermöglichen.

In der DE 103 12 517 A1 sind eine Arretiervorrichtung mit Federmitteln und eine Kopfstütze mit einer solchen Arretiervorrichtung beschrieben. Die Arretiervorrichtung ist relativ zu zwei Haltestangen verstellbar, wobei zur Arretierung die Federmittel mit einer Mehrzahl von Ausnehmungen der Haltestangen zusammenwirken. Die Arretierung der Haltestangen ist durch eine mechanische Fixierung der Federmittel in einem Zentralbereich bewirkbar. Alternativ dazu bewirkt eine Kraftwirkung auf die Federmittel in dem Zentralbereich eine Arretierung der beiden Haltestangen.

Aus der DE 296 13 073 U1 ist eine Vorrichtung zur Verriegelung einer Kopfstütze an Kraftfahrzeug-Teilen bekannt, bestehend aus einer Kopfstütze mit zwei parallelen Führungsstangen, die in Aufnahmekanäle des Kraftfahrzeug-Teils einschiebbar sind, sowie Verriegelungsmitteln, die in den Aufnahmekanälen oder an der Mündung der Aufnahmekanäle gehalten sind und mittels eines Betätigungsmittels aus einer Verriegelungsposition, in welcher die Stangen begrenzt verschieblich oder vorzugsweise unverschieblich arretiert sind, in eine Freigabeposition, in der die Stangen frei verschieblich und aus den Aufnahmekanälen entnehmbar sind, verstellbar sind.

In der EP 0 864 461 A1 wird eine Kopfstütze für Kraftfahrzeuge beschrieben, die an einem Rahmen mit zwei seitlichen röhrenartigen Ständern befestigt ist. Die Ständer können zwei Stützzapfen verschiebbar aufnehmen, welche mit einer Sitzlehne verbunden sind und aus dieser herausragen. Die Stützzapfen weisen Aussparungen zur vollständigen Aufnahme von Schenkelfedern auf. Außerhalb der Kopfstütze sind Betätigungsmittel bedienbar, die auf seitlich vorragende Enden der Schenkelfedern einwirken, so dass die Schenkel der Schenkelfedern geweitet werden und die Ständer von den Stützzapfen freigeben.

Die US 2006/0186720 A1 offenbart einen Verschiebe- und Führungsmechanismus mit Positionsfeststellung, der eine Stange und mindestens eine gegenüber der Stange verschiebbare Hülse umfasst. Die Hülse ist an einer parallel zu der Stange angeordneten Stützplatte und an einem Verriegelungsbauteil befestigt. Das Verriegelungsbauteil umfasst zwei im Wesentlichen parallele Trägerelemente, welche so angeordnet sind, dass sie in einer Verriegelungsstellung des Verriegelungsbauteils eine Klemmkraft auf zwei gegenüberliegende Seiten der Stange ausüben. Die Hülsen sind so angeordnet, dass die Stange auf der Stützplatte in einer Montagerichtung senkrecht zur Stützplatte montiert werden kann. Das Verriegelungsbauteil umfasst zwischen den zwei Trägerelementen eine Aussparung, die das Einsetzen der Stange in die Aussparung gleichzeitig mit der Montage der Stange auf der Stützplatte erlaubt.

Aufgabe der vorliegenden Erfindung ist es, eine verbesserte Arretiervorrichtung mit diskreten Arretierpositionen und eine verbesserte Kopfstütze anzugeben, wobei eine leichtgängige Entriegelung und eine kosteneffiziente Herstellung in großen Stückzahlen ermöglicht ist.

Die Aufgabe wird erfindungsgemäß gelöst durch eine Arretiervorrichtung für eine Kopfstütze mit den Merkmalen des Patentanspruchs 1 und einer Kopfstütze für einen Fahrzeugsitz mit den Merkmalen des Patentanspruchs 9.

Bevorzugte Ausführungen der Erfindung sind Gegenstand der Unteransprüche.

Bei einer Arretiervorrichtung für eine Kopfstütze ist ein Verriegelungselement in einer Trägervorrichtung verschiebbar gelagert. Das Verriegelungselement ist von einer verriegelten Position in eine entriegelte Position mittels einer Betätigung einer Betätigungsvorrichtung verschiebbar. Die Arretiervorrichtung ist bezüglich einer Haltestange verschiebbar gelagert. Wenn im Folgenden von einer Haltestange die Rede ist, ist für den Fachmann klar, dass es sich auch um mehrere Haltestangen, insbesondere zwei Haltestangen handeln kann. Das Verriegelungselement in der entriegelten Position ermöglicht eine Verschiebung der Arretiervorrichtung bezüglich der Haltestange, wohingegen das Verriegelungselement in der verriegelten Position zur Arretierung der Arretiervorrichtung bezüglich der Haltestange in zumindest eine Aussparung der Haltestange eingreift. Erfindungsgemäß ist die Trägervorrichtung mit dem darin angeordneten Verriegelungselement in der verriegelten Position spiegelsymmetrisch zu einer im Wesentlichen senkrecht zur Trägervorrichtung verlaufenden xz-Ebene ausgebildet und umfasst eine obere Trägerplatte und eine untere Trägerplatte, welche zueinander und parallel zu einer senkrecht zur xz-Ebene angeordneten y-Achse verschiebbar sind. Ist die Arretiervorrichtung insbesondere in einer Kopfstütze eines Fahrzeugsitzes verbaut, so kann die y-Achse quer zu einer Fahrtrichtung, die parallel zu einer x-Achse verläuft, ausgerichtet sein. Mittels der zueinander verschiebbar gelagerten unteren und oberen Trägerplatte ist eine Kraft, die ein Benutzer auf die Betätigungsvorrichtung ausübt, auf das Verriegelungselement übertragbar, so dass die Arretiervorrichtung entriegelt werden kann, um insbesondere eine Höheneinstellung der Kopfstütze vorzunehmen.

Mit der spiegelsymmetrischen Ausbildung der Trägervorrichtung und des Verriegelungselements der Arretiervorrichtung ist in besonders vorteilhafter Weise ein modulares Konzept realisiert. Unabhängig von der geplanten räumlichen Anordnung der Kopfstütze, insbesondere in einem Fahrzeug, und der räumlichen Anordnung der an der Kopfstütze befestigten Betätigungsvorrichtung kann aufgrund der Spiegelsymmetrie eine gleichartige Arretiervorrichtung zur Arretierung jeder der insbesondere höhenverstellbaren Kopfstützen verwendet werden.

Dies ist insbesondere für die Verwendung der Arretiervorrichtung und der Kopfstütze in einem Fahrzeug, wie beispielsweise für einen Fahrzeugsitz im Frontbereich eines Personenkraftwagens vorteilhaft, da dort oftmals aus Platzgründen die Betätigungsvorrichtung nur an eine Seite der Kopfstütze angebracht werden kann. Dabei ist die Betätigungsvorrichtung der Kopfstütze eines Fahrersitzes an einer Seite angebracht, wohingegen die Betätigungsvorrichtung der Kopfstütze eines Beifahrersitzes an der gegenüberliegenden Seite angebracht ist. Die Spiegelsymmetrie der Trägervorrichtung und des Verriegelungselements der Arretiervorrichtung ermöglicht das Befestigen der Betätigungsvorrichtung, insbesondere alternativ linksseitig oder rechtsseitig von der xz-Ebene entlang der y-Achse.

Vorzugsweise greift das Verriegelungselement in die Aussparung der Haltestange form- und/oder kraftschlüssig ein.

Die Verwendung von gleichartigen Arretiervorrichtungen für verschieden angeordnete Kopfstützen, insbesondere in einem Fahrzeuginnenraum erlaubt die Herstellung der Arretiervorrichtungen in großer Stückzahl, womit Produktionskosten eingespart sind. Insbesondere ist es unnötig, verschiedene Arretiervorrichtungen, die im Wesentlichen spiegelverkehrt zueinander ausgebildet sind, zu produzieren, um eine linksseitige oder eine rechtsseitige Anordnung der Betätigungsvorrichtung zu ermöglichen.

Einer bevorzugten Ausgestaltung der Erfindung zufolge spannt ein erstes Federmittel das Verriegelungselement in die verriegelte Position vor. Damit ist sichergestellt, dass die Arretiervorrichtung mit der Haltestange mechanisch fixiert ist, solange die Betätigungsvorrichtung nicht betätigt ist.

Einer bevorzugten Ausbildung der Erfindung zufolge ist ein zweites Federmittel vorgesehen, das die obere Trägerplatte und die untere Trägerplatte in eine zentrierte Position vorspannt. Damit ist mittels einer einfachen Mechanik erreicht, dass die untere und die obere Trägerplatte nach dem Betätigen der Betätigungsvorrichtung in die ursprüngliche zentrierte Position zurückkehren, die zur verriegelten Position des Verriegelungselements korrespondiert. Die Arretiervorrichtung ist somit derart konzipiert, dass ein Benutzer eine Kraft auf die Betätigungsvorrichtung ausüben muss, um das Verriegelungselement in die entriegelte Position zu führen, wobei automatisch bei Freigabe der Betätigungsvorrichtung das Verriegelungselement in die verriegelte Position zurückkehrt. Das zweite Federmittel hat außerdem die Aufgabe, Spielfreiheit zwischen oberer Trägerplatte und unterer Trägerplatte in y-Richtung sicherzustellen, so dass keine unerwünschten Geräusche entstehen.

Vorzugsweise umfasst das zweite Federmittel zwei gegenüberliegend angeordnete Schraubenfedern, die zueinander gegenläufig jeweils zwischen oberer und unterer Trägerplatte angeordnet sind, so dass die eine der beiden Schraubenfedern gedehnt wird, wenn die andere der beiden Schraubenfedern gestaucht wird. Damit ist auf besonders einfache Art erreicht, dass die obere Trägerplatte in die zentrierte Position nach Betätigung der Betätigungsvorrichtung zurückkehrt. Darüber hinaus ermöglicht diese einfache Mechanik eine erneute Entriegelung mittels darauffolgender erneuter Betätigung der Betätigungsvorrichtung.

Vorzugsweise ist die Betätigungsvorrichtung als Druckknopf oder als Kipphebel ausgebildet.

Eines möglichen Ausbildungsbeispiels der Erfindung zufolge ist das Verriegelungselement bezüglich der unteren Trägerplatte derart gelagert, dass das Verriegelungselement parallel zur y-Achse fixiert ist und parallel zu einer zur y-Achse senkrecht verlaufenden x-Achse bewegbar ist. Die Betätigung der Betätigungsvorrichtung überträgt eine Kraft mittels der oberen Trägerplatte auf das Verriegelungselement, um das Verriegelungselement zum Entriegeln von der Haltestange weg bzw. zum Verriegeln auf die Haltestange hinzu zu bewegen. Dabei erfolgt die Bewegung des Verriegelungselements parallel zur x-Achse und senkrecht zur Richtung der ursprünglich von dem Benutzer ausgeübten Kraft, die entlang der y-Achse gerichtet ist.

Vorzugsweise weisen die obere Trägerplatte und das Verriegelungselement Mittel auf, mittels derer die auf die obere Trägerplatte und parallel zur y-Achse einwirkende Kraft auf das Verriegelungselement in einer Richtung parallel zur x-Achse übertragbar ist, um eine lineare Bewegung des Verriegelungselements zum Ver- und Entriegeln der Arretiervorrichtung sicherzustellen.

Einer bevorzugten Ausbildung der Erfindung zufolge weisen die Mittel einen abgewinkelten Abschnitt des Verriegelungselements und eine abgewinkelte Fläche der oberen Trägerplatte auf, wobei der abgewinkelte Abschnitt an die abgewinkelte Fläche anschlägt. Der abgewinkelte Abschnitt und die abgewinkelte Fläche verlaufen dabei schräg zu der x- und der y-Achse, so dass eine Verschiebung der oberen Trägerplatte parallel der y-Achse eine Verschiebung des Verriegelungselements parallel zur x-Achse bewirkt.

Eine Kopfstütze für einen Fahrzeugsitz weist die oben beschriebene Arretiervorrichtung auf, wobei mittels der Arretiervorrichtung die insbesondere höhenverstellbare Kopfstütze in einem vorgebbaren Abstand arretierbar ist. Zur Einsparung von Herstellungskosten kann die Betätigungsvorrichtung ohne wesentliche bauliche Veränderungen linksseitig oder alternativ dazu rechtsseitig von der xz-Ebene angebracht werden. Dazu kann die Kopfstütze insbesondere ein Trägerteil aufweisen, das ebenfalls spiegelsymmetrisch zur xz-Ebene ausgebildet ist und Befestigungsaussparungen aufweist, die zur Aufnahme und Befestigung der Betätigungsvorrichtung geeignet sind.

Anhand der beigefügten schematischen Figuren wird die Erfindung näher erläutert.

### Dabei zeigen:

- Figur 1: eine Draufsicht einer Arretiervorrichtung mit einem Verriegelungselement in einer verriegelten Position,
- Figur 2: eine Draufsicht einer Arretiervorrichtung mit einem Verriegelungselement in einer entriegelten Position, wobei eine obere Trägerplatte gegenüber einer unteren Trägerplatte eine erste seitlich versetzte Position einnimmt,
- Figur 3: eine Draufsicht einer Arretiervorrichtung mit einem Verriegelungselement in einer entriegelten Position, wobei eine obere Trägerplatte gegenüber einer unteren Trägerplatte eine zweite seitlich versetzte Position einnimmt,
- Figur 4: eine Explosionsdarstellung einer Arretiervorrichtung,
- Figur 5: eine Explosionsdarstellung einer Betätigungsvorrichtung,
- Figur 6: eine perspektivische Darstellung einer Haltestange mit einer Haltemanschette,
- Figur 7: eine perspektivische Darstellung eines Trägerteils einer Kopfstütze,
- Figur 8: eine perspektivische Darstellung einer Anordnung einer Kopfstützenpolsterung an einem Trägerteil einer Kopfstütze,
- Figur 9: eine Rückansicht zweier ungepolsterten Kopfstützen, wobei jeweils eine Betätigungsvorrichtung an jeweils einer der beiden Kopfstützen angeordnet ist,
- Figur 10: eine Draufsicht einer alternativen Ausführungsform einer Arretiervorrichtung mit einem Verriegelungselement, das einen im Wesentlichen W-förmig abgewinkelten Abschnitt aufweist.

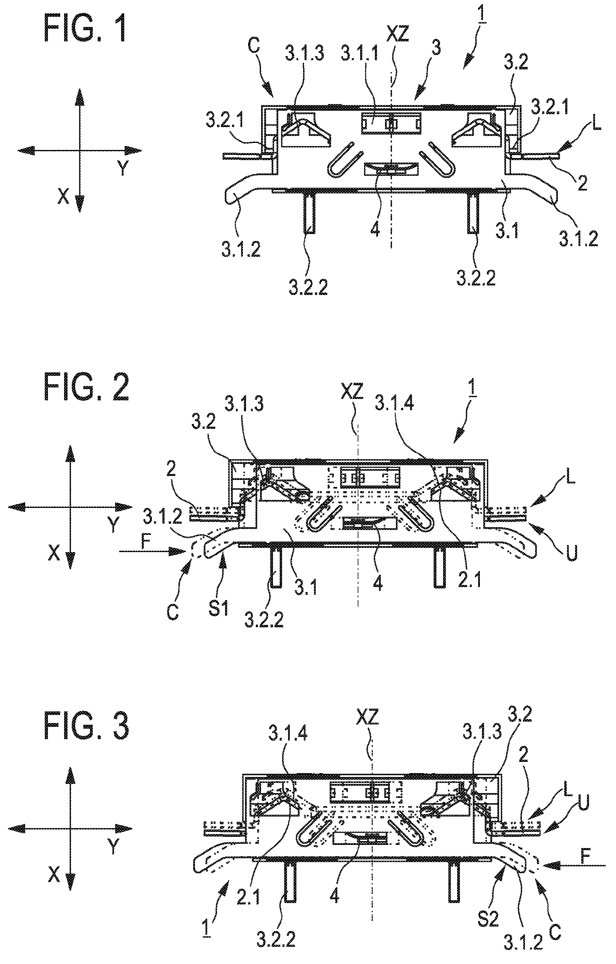

Figur 1 zeigt eine Draufsicht einer Arretiervorrichtung 1 mit einem Verriegelungselement 2 in einer verriegelten Position L. Das Verriegelungselement 2 ist zwischen einer oberen Trägerplatte 3.1 und einer unteren Trägerplatte 3.2 einer Trägervorrichtung 3 angeordnet, wobei die obere Trägerplatte 3.1 relativ zur unteren Trägerplatte 3.2 entlang einer y-Achse Y verschiebbar gelagert ist.

Das bügelförmige Verriegelungselement 2 ist in die untere Trägerplatte 3.2 eingelegt, wobei ein Begrenzungselement 3.2.1, das der unteren Trägerplatte 3.2 angeformt ist, an das Verriegelungselement 2 angrenzt und eine Bewegung des Verriegelungselements 2 parallel zur y-Achse Y verhindert.

Das bügelförmige Verriegelungselement 2 ist von einem zwischen oberer und unterer Trägerplatte angeordneten ersten Federmittel 4 in die verriegelte Position L vorgespannt.

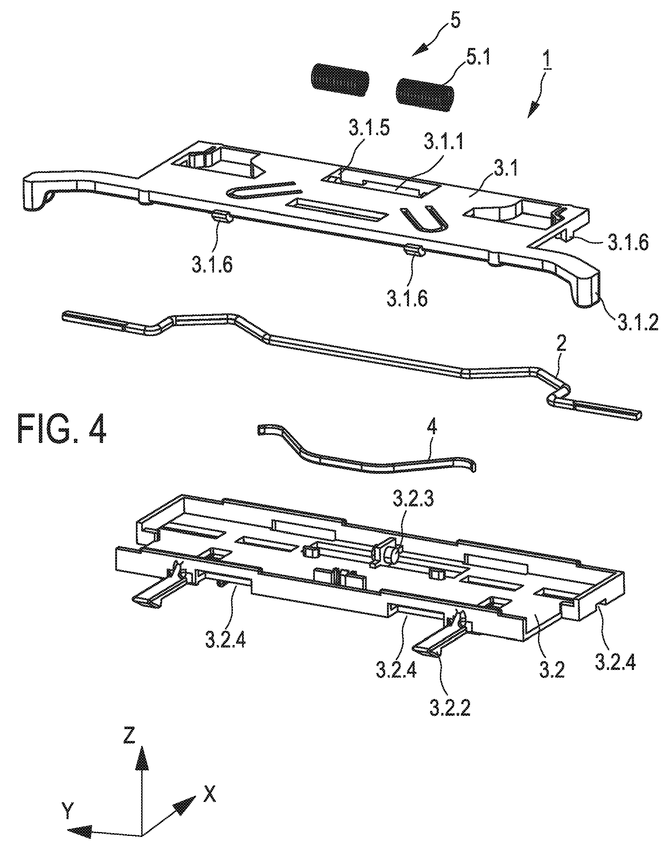

Die obere Trägerplatte 3.1 weist eine Aufnahmeaussparung 3.1.1 auf, die zur Aufnahme eines zweiten Federmittels 5, das zwei gegenüberliegende und zueinander gegenläufig gelagerte Schraubenfedern 5.1 umfasst, die im Detail in Figur 4 dargestellt sind, geeignet ist. Mit dem zweiten Federmittel 5 ist eine Vorspannung der oberen Trägerplatte 3.1 bezüglich der unteren Trägerplatte 3.2 in eine zentrierte Position C erreicht.
Die obere und die untere Trägerplatte 3.1, 3.2 mit dem dazwischen liegenden Verriegelungselement 2 in der verriegelten Position L sind, wie in Figur 1 dargestellt, spiegelsymmetrisch zu einer xz-Ebene XZ ausgebildet und angeordnet. Dabei verläuft die xz-Ebene XZ parallel zu der x-Achse X und einer senkrecht zur in Figur 1 dargestellten Ebene verlaufenden z-Achse Z.
Die obere Trägerplatte 3.1 weist zwei gegenüberliegende und seitlich hervorstehende Arme 3.1.2 auf. Des Weiteren sind der unteren Trägerplatte 3.2 zwei hervorstehende Rastarme 3.2.2 zur Befestigung der Arretiervorrichtung 1 an einem weiteren Bauteil angeformt.
Das bügelförmige Verriegelungselement 2 ist abschnittsweise abgewinkelt. Zumindest ein flexibler Arm 3.1.3 stößt an dem abschnittsweise abgewinkelten Verriegelungselement 2 derart an, dass ein Spiel bzw. eine Toleranz ausgleichbar ist.
Figur 2 zeigt eine Draufsicht der Arretiervorrichtung 1 mit dem Verriegelungselement 2 in einer entriegelten Position U. Die obere Trägerplatte 3.1 nimmt gegenüber der unteren Trägerplatte 3.2 eine erste seitlich versetzte Position S1 ein. Die obere Trägerplatte 3.1, in der ersten seitlich versetzten Position S1, ist gegenüber der zentrierten Position C parallel zur y-Achse nach rechts versetzt. Zum besseren Vergleich der ersten seitlich versetzten Position S1 zur zentrierten Position C ist eine weitere obere Trägerplatte 3.1 in der zentrierten Position C in Figur 2 gestrichelt eingezeichnet.

Die obere Trägerplatte 3.1 ist mittels einer parallel zur y-Achse Y auf den seitlich hervorstehenden Arm 3.1.2 einwirkenden Kraft F von der zentrierten Position C in die erste seitlich versetzte Position S1 verschiebbar. Dabei weisen die obere Trägerplatte 3.1 und das Verriegelungselement 2 Mittel auf, die die auf die obere Trägerplatte 3.1 einwirkende Kraft F auf das Verriegelungselement 2 in eine Richtung parallel zur x-Achse X übertragen.

Ein abgewinkelter Abschnitt 2.1 des bügelförmigen Verriegelungselements 2 schlägt an eine abgewinkelte Fläche 3.1.4 an, so dass die auf die obere Trägerplatte 3.1 einwirkende Kraft F auf das Verriegelungselement 2 übertragbar ist. Die Verschiebung der oberen Trägerplatte 3.1 von der zentrierten Position C in die erste seitlich versetzte Position S1 bewirkt somit eine Verschiebung des Verriegelungselements 2 parallel zur x-Achse X von der verriegelten Position L in die entriegelte Position U. Dabei ist das Verriegelungselement 2 in der entriegelten Position U gegenüber der verriegelten Position L parallel zur y-Achse Y versetzt. Zum besseren Vergleich von entriegelter Position U und verriegelter Position L ist in Figur 2 ein zusätzliches Verriegelungselement 2 in der verriegelten Position L gestrichelt eingezeichnet.

Figur 3 zeigt eine Draufsicht der Arretiervorrichtung 1 mit dem Verriegelungselement 2 in der entriegelten Position U, wobei die obere Trägerplatte 3.1 gegenüber der unteren Trägerplatte 3.2 eine zweite seitlich versetzte Position S2 einnimmt. Figur 3 korrespondiert im Wesentlichen zu der bereits in Figur 2 dargestellten Situation, mit dem Unterschied, dass die für die Führung des Verriegelungselements 2 von der verriegelten Position L in die entriegelte Position U notwendige Kraft F parallel zur y-Achse nach links gerichtet ist. Dementsprechend ist die obere Trägerplatte 3.1 gegenüber der unteren Trägerplatte 3.2 im Vergleich zur zentrierten Position C nach links in der zweiten seitlich versetzten Position S2 positioniert. Die zentrierte Position C der oberen

Trägerplatte 3.1 und die verriegelte Position L des Verriegelungselements 2 sind in Figur 3 mittels gestrichelter Konturen dargestellt.

Figur 4 zeigt eine Explosionsdarstellung der Arretiervorrichtung 1, die die obere Trägerplatte 3.1, die untere Trägerplatte 3.2, das erste Federmittel 4, das abschnittsweise abgewinkelte Verriegelungselement 2 und das zweite Federmittel 5 umfasst, wobei das zweite Federmittel 5 zwei gegenüberliegend angeordnete Schraubenfedern 5.1 aufweist. Jede der beiden Schraubenfedern 5.1 schlägt an eine Anschlagsfläche 3.1.5 der oberen Trägerplatte 3.1 und einem zentralen Steg 3.2.3, der an der unteren Trägerplatte 3.2 angeformt ist, an. Damit sind die beiden Schraubenfedern 5.1 gegenläufig gelagert und die obere Trägerplatte 3.1 in die zentrierte Position C vorgespannt.

Einer alternativen Ausführungsform der Erfindung zufolge ist das zweite Federmittel 5 aus einem Gummi gefertigt. Dabei umfasst das zweite Federmittel 5 einen elastisch deformierbaren O-Ring, der die obere Trägerplatte 3.1 in die zentrierte Position C vorspannt.

Zur Verbindung der oberen Trägerplatte 3.1 mit der unteren Trägerplatte 3.2 weist die obere Trägerplatte 3.1 eine Vielzahl von Haltenasen 3.1.6 auf, wobei die Haltenase 3.1.6 in eine jeweils entsprechende Halteaussparung 3.2.4 eingreift. Dabei weisen die Halteaussparungen 3.2.4 eine entsprechende axiale Ausdehnung parallel zur y-Achse Y auf, damit eine Verschiebung der oberen Trägerplatte 3.1 bezüglich der unteren Trägerplatte 3.2 zwischen der zentrierten Position C, der ersten und der zweiten seitlich versetzten Position S1, S2 ermöglicht ist.

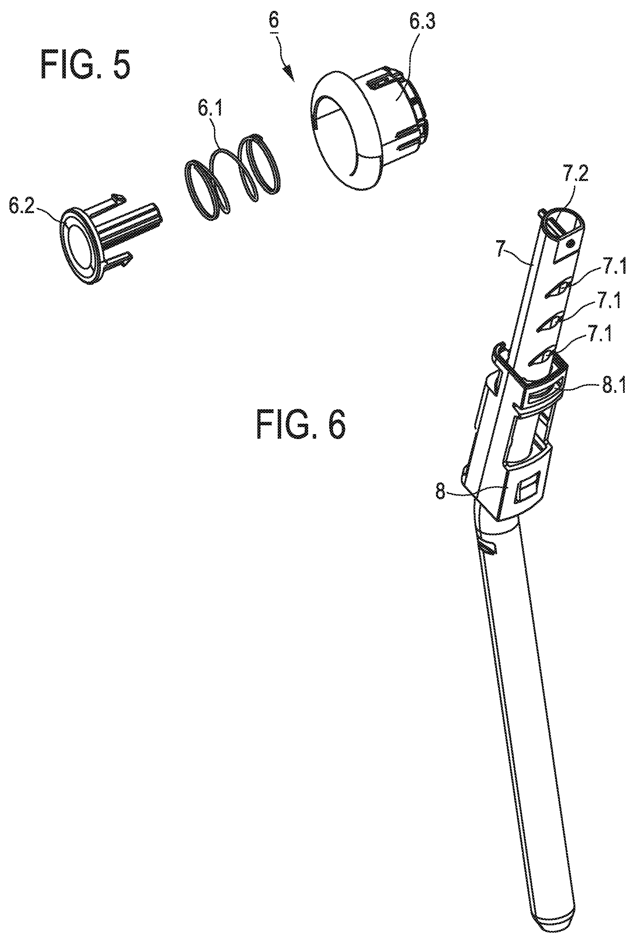

Figur 5 zeigt eine Explosionsdarstellung einer Betätigungsvorrichtung 6, die als Druckknopf ausgebildet ist. Die Betätigungsvorrichtung 6 umfasst ein Federelement 6.1, ein Betätigungselement 6.2 und eine Haltebuchse 6.3.

Das Betätigungselement 6.2 ist entgegen einer von dem Federelement 6.1 ausgeübten Federkraft in die Haltebuchse 6.3 manuell hinein drückbar. Die Betätigungsvorrichtung 6 ist derart angeordnet, dass beim manuellen Betätigen der Betätigungsvorrichtung 6 die Kraft F auf einen der beiden seitlich hervorstehenden Arme 3.1.2 der oberen Trägerplatte 3.1 vermittelt wird.

In Figur 6 ist eine Haltestange 7 mit einer Mehrzahl von voneinander beabstandeten Aussparungen 7.1 gezeigt. Zur Arretierung der Arretiervorrichtung 1 in einer vorgebbaren Position relativ zur Haltestange 7 greift das Verriegelungselement 2 in eine der Aussparungen 7.1 kraft- und/oder formschlüssig ein.

Eine Haltemanschette 8 ist an der Haltestange 7 verschiebbar gelagert. Die Haltemanschette 8 dient zur Befestigung der Arretiervorrichtung 1 an der Haltestange 7, so dass die Arretiervorrichtung 1 in einer Vielzahl von Positionen, die zu den Aussparungen 7.1 korrespondieren, arretierbar ist. Dazu greift das Verriegelungselement 2 durch eine schlitzförmige Aussparung 8.1 der Haltemanschette 8 in die Aussparung 7.1 der Haltestange 7 ein. Ein an der Haltestange 7 endseitig angebrachter Fixierstift 7.2 limitiert eine Verschiebung der Haltemanschette 8 entlang der Haltestange 7.

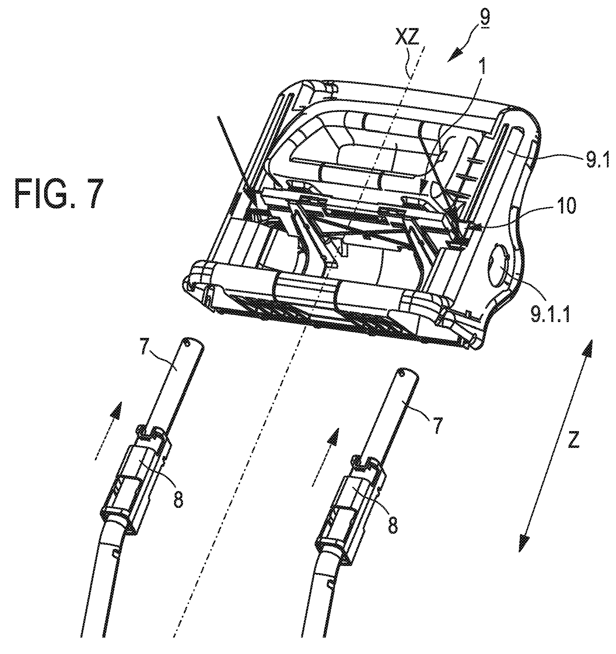

Figur 7 zeigt eine perspektivische Darstellung eines Trägerteils 9.1 einer Kopfstütze 9. Das Trägerteil 9.1 ist aus einem Kunststoffmaterial gefertigt und weist Befestigungsmittel 10 zur Aufnahme und Befestigung der Arretiervorrichtung 1 auf. Die Fixierung der Arretiervorrichtung 1 an dem Trägerteil 9.1 erfolgt mittels einer Rastverbindung zwischen dem Befestigungsmittel 10 und dem Rastarm 3.2.2.

Das Trägerteil 9.1 ist spiegelsymmetrisch zur xz-Ebene XZ ausgebildet und weist zwei gegenüberliegende Befestigungsaussparungen 9.1.1 auf, die dazu geeignet sind, die Haltebuchse 6.3, zur Befestigung der Betätigungsvorrichtung 6 an dem Trägerteil 9.1, aufzunehmen. Dabei ist an der Kopfstütze 9 nur eine Betätigungsvorrichtung 6 befestigt, die entweder rechtsseitig oder, alternativ dazu, linksseitig in eine der beiden Befestigungsaussparungen 9.1.1 eingreift.

Zwei parallel zueinander angeordnete Haltestangen 7, die jeweils eine Haltemanschette 8 aufweisen, sind in dem Trägerteil 9.1 eingeschoben. Die Haltemanschette 8 ist mit dem Trägerteil 9.1 kraft- und/oder formschlüssig, beispielsweise mittels einer weiteren Rastverbindung verbunden. Damit ist das Trägerteil 9.1 der Kopfstütze 9 bezüglich der Haltestangen 7 verschiebbar gelagert, so dass die Kopfstütze 9 im Wesentlichen entlang der z-Achse Z in eine gewünschte Höhe führbar ist und mittels der Arretiervorrichtung 1 dort arretierbar ist.

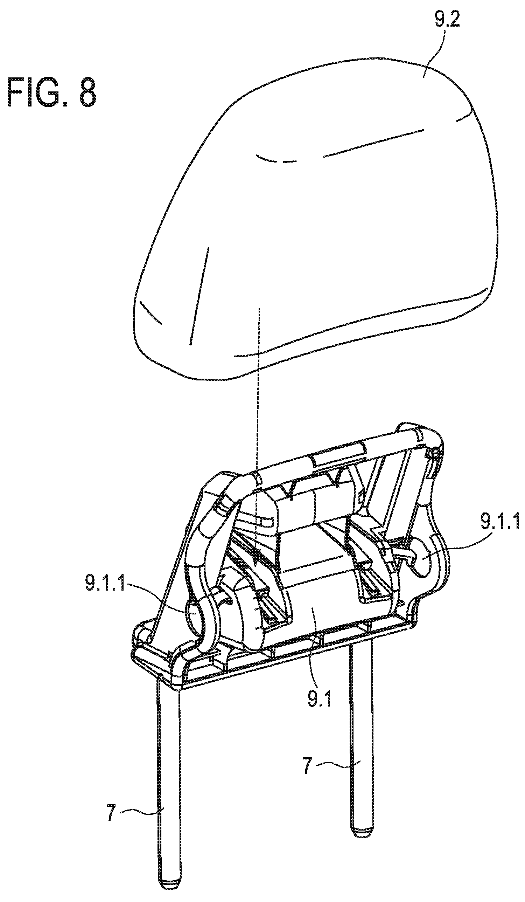

Figur 8 zeigt eine perspektivische Darstellung einer Anordnung einer Kopfstützenpolsterung 9.2 an dem Trägerteil 9.1 der Kopfstütze 9. Die Kopfstützenpolsterung 9.2 ist aus einem Kunststoffschaumstoff gefertigt, so dass an einer Seite, an dem die Betätigungsvorrichtung 6 angebracht werden soll, eine entsprechende Ausnehmung, wie in Figur 8 durch eine gestrichelte kreisförmige Kontur angedeutet, aus dem Material der Kopfstützenpolsterung 9.2 herausgeschnitten werden kann.

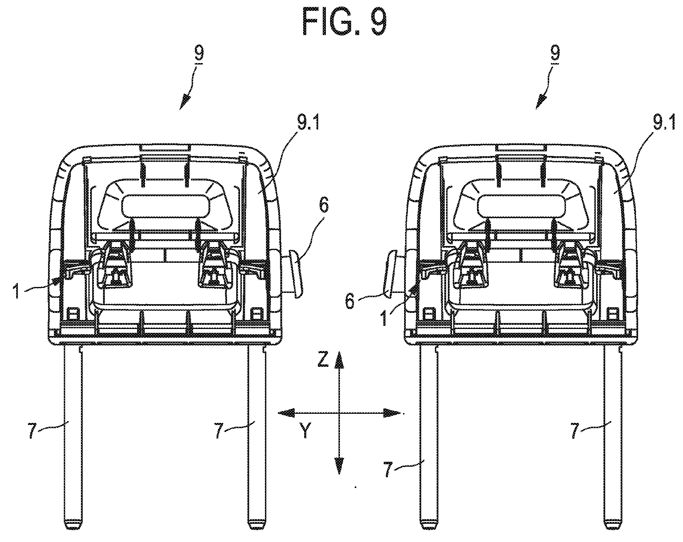

Figur 9 zeigt eine Rückansicht zweier ungepolsterten Kopfstützen 9, wobei jeweils eine Betätigungsvorrichtung 6 an jeweils einer der beiden Kopfstützen 9 angeordnet ist. Eine der beiden Kopfstützen 9 weist eine rechtsseitig angebrachte Betätigungsvorrichtung 6 auf, wohingegen die andere der beiden Kopfstützen 9 eine linksseitig angebrachte Betätigungsvorrichtung 6 aufweist.

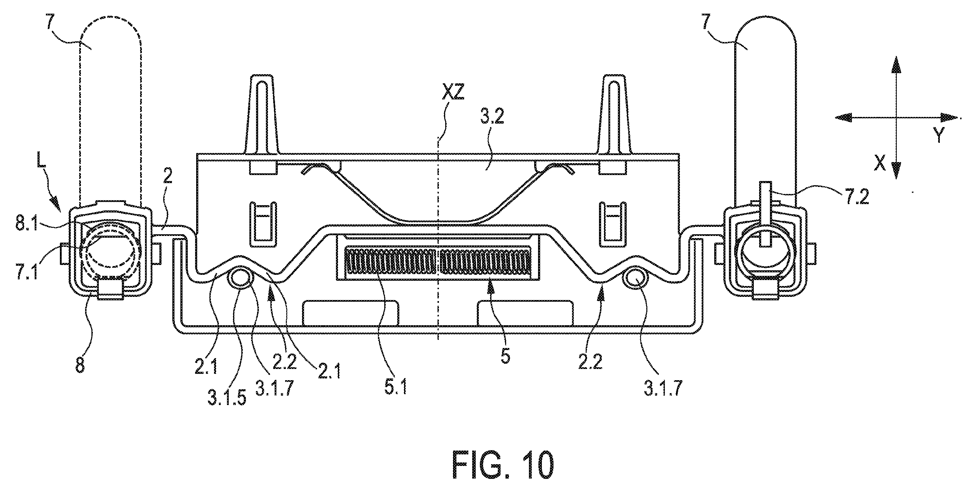

Figur 10 zeigt eine Draufsicht eines alternativen Ausführungsbeispiels der Arretiervorrichtung 1. Gezeigt ist die untere Trägerplatte 3.2, in die das bügelförmige Verriegelungselement 2 eingelegt ist. Das Verriegelungselement 2 weist einen im Wesentlichen W-förmig abgewinkelten Abschnitt 2.2 auf, der zwei aneinander angrenzende, abgewinkelte Abschnitte 2.1 umfasst. Ein an der oberen Trägerplatte 3.1 angeformter Anschlagzapfen 3.1.7 mit einem im Wesentlichen kreisförmigen Querschnitt bildet die runde Anschlagsfläche 3.1.5, die an den beiden aneinander angrenzenden, abgewinkelten Abschnitten 2.1 des im Wesentlichen W-förmig abgewinkelten Abschnitts 2.2 anschlägt. Alternativ kann in allen Ausführungsformen der Erfindung die vertikale Anordnung bezüglich der z-Achse Z von der oberen Trägerplatte 3.1 und der unteren Trägerplatte 3.2 vertauscht sein, d.h. die untere Trägerplatte 3.2 kann insbesondere oberhalb der Trägerplatte 3.1 angeordnet sein.
Die manuelle Betätigung der Betätigungsvorrichtung 6 bewirkt eine relative Verschiebung zwischen dem Anschlagzapfen 3.1.7 und der unteren Trägerplatte 3.2 parallel zur y-Achse Y. Dabei schlägt die Anschlagsfläche 3.1.5 an einem der beiden aneinander angrenzenden, abgewinkelten Abschnitte 2.1 an, so dass das Verriegelungselement 2 zur Entriegelung parallel zur x-Achse X von der Haltestange 7 wegbewegbar ist.
Zur Höhenverstellung der Kopfstütze 9 wird die Betätigungsvorrichtung 6 manuell von dem Benutzer betätigt, wobei das Betätigungselement 6.2 nach innen gedrückt wird. Dabei übt der Benutzer die Kraft F aus, um das Verriegelungselement 2 der Arretiervorrichtung 1 von der verriegelten Position L in die entriegelte Position U zu führen. Solange die Kraft F aufgewendet wird, verbleibt das Verriegelungselement 2 in der entriegelten Position U, die eine Höhenverstellung der Kopfstütze 9 erlaubt. Dazu wird die Kopfstütze 9 im Wesentlichen parallel zur z-Achse Z verschoben. Sobald der Benutzer die Betätigungsvorrichtung frei gibt, wird das Verriegelungselement 2 mittels einer Federkraft, die auf das Verriegelungselement 2 von dem ersten Federmittel 4 ausgeübt wird, zurück in die verriegelte Position L geführt. Dabei greift das Verriegelungselement 2 in eine der Aussparungen 7.1 der Haltestange 7 zur Arretierung der Kopfstütze 9 in der vorgegebenen Höhe ein.

In dem in Figur 10 gezeigten Ausführungsbeispiel sind die beiden abgewinkelten Abschnitte 2.1 und der Anschlagzapfen 3.1.7 derart dimensioniert, dass die von einem Benutzer auf die Betätigungsvorrichtung 6 ausgeübte Kraft F beim Hineindrücken des Betätigungselements 6.2 nicht konstant ist. Die Kraft F steigt anfänglich im Wesentlichen mit zunehmender Verschiebung von oberer und unterer Trägerplatte 3.1, 3.2 linear an. Erreicht die rund ausgebildete Anschlagsfläche 3.1.5 des Anschlagzapfens 3.1.7 ein Ende des abgewinkelten Abschnitts 2.1, so liegt die Anschlagsfläche 3.1.5 dem abgekanteten Ende des abgewinkelten Abschnitts 2.1 derart an, dass eine parallel zur y-Achse Y einwirkende Federkraft, die von dem ersten Federmittel 4 ausgeübt wird, keine Krafteinwirkung auf die obere Trägerplatte 3.2 parallel zur x-Achse X bewirkt. In Folge dessen fällt die vom Benutzer der Betätigungsvorrichtung 6 aufgewendete Kraft F ab oder bleibt zumindest konstant. Damit ist erreicht, dass die Arretiervorrichtung 1 für die Kopfstütze 9 vom Benutzer mit einer verringerten Kraft F im entriegelten Zustand gehalten werden kann, in dem das Verriegelungselement 2 in der entriegelten Position U positioniert ist.

### Bezugszeichenliste

- 1: Arretiervorrichtung
- 2: Verriegelungselement
- 2.1: abgewinkelter Abschnitt
- 2.2: W-förmig abgewinkelter Abschnitt
- 3: Trägervorrichtung
- 3.1: obere Trägerplatte
- 3.1.1: Aufnahmeaussparung
- 3.1.2: seitlich hervorstehender Arm
- 3.1.3: flexibler Arm
- 3.1.4: abgewinkelte Fläche
- 3.1.5: Anschlagsfläche
- 3.1.6: Haltenase
- 3.1.7: Anschlagzapfen
- 3.2: untere Trägerplatte
- 3.2.1: Begrenzungselement
- 3.2.2: Rastarm
- 3.2.3: zentraler Steg
- 3.2.4: Halteaussparung
- 4: erstes Federmittel
- 5: zweites Federmittel
- 5.1: Schraubenfeder
- 6: Betätigungsvorrichtung
- 6.1: Federelement
- 6.2: Betätigungselement
- 6.3: Haltebuchse
- 7: Haltestange
- 7.1: Aussparung
- 7.2: Fixierstift
- 8: Haltemanschette
- 8.1: schlitzförmige Aussparung
- 9: Kopfstütze
- 9.1: Trägerteil
- 9.1.1: Befestigungsaussparung
- 9.2: Kopfstützenpolsterung
- 10: Befestigungsmittel
- F: Kraft
- L: verriegelte Position
- U: entriegelte Position
- C: zentrierte Position
- S1: erste seitlich versetzte Position
- S2: zweite seitlich versetze Position
- X: x-Achse
- Y: y-Achse
- Z: z-Achse
- XZ: xz-Ebene

## Patentansprüche

1. Arretiervorrichtung (1) für eine Kopfstütze (9) mit einem in einer Trägervorrichtung (3) verschiebbar gelagerten Verriegelungselement (2), das von einer verriegelten Position (L) in eine entriegelte Position (U) mittels einer Betätigung einer Betätigungsvorrichtung (6) verschiebbar ist, wobei die Arretiervorrichtung (1) bezüglich einer Haltestange (7) verschiebbar gelagert ist, das Verriegelungselement (2) in der entriegelten Position (U) eine Verschiebung der Arretiervorrichtung (1) bezüglich der Haltestange (7) ermöglicht, das Verriegelungselement (2) in der verriegelten Position (L) zur Arretierung der Arretiervorrichtung (1) bezüglich der Haltestange (7) in zumindest eine Aussparung (7.1) der Haltestange (7) eingreift und die Trägervorrichtung (3) mit dem darin angeordneten Verriegelungselement (2) in der verriegelten Position (L) spiegelsymmetrisch zu einer senkrecht zur Trägervorrichtung (3) verlaufenden xz-Ebene (XZ) ausgebildet ist, **dadurch gekennzeichnet, dass** die Trägervorrichtung (3) eine obere Trägerplatte (3.1) und eine untere Trägerplatte (3.2) umfasst, welche zueinander und parallel zur y-Achse (Y) verschiebbar sind.

2. Arretiervorrichtung (1) nach Anspruch 1,
**dadurch gekennzeichnet, dass** die Betätigungsvorrichtung (6) linksseitig oder rechtsseitig von der xz-Ebene (XZ), entlang einer zur xz-Ebene (XZ) senkrecht verlaufenden y-Achse (Y), angeordnet ist.

3. Arretiervorrichtung (1) nach Anspruch 1 oder 2,
**dadurch gekennzeichnet, dass** ein erstes Federmittel (4) das Verriegelungselement (2) in die verriegelte Position (L) vorspannt.

4. Arretiervorrichtung (1) nach Anspruch 3,
**dadurch gekennzeichnet, dass** ein zweites Federmittel (5) vorgesehen ist, das die obere Trägerplatte (3.1) und die untere Trägerplatte (3.2) in eine zentrierte Position (C) vorspannt.

5. Arretiervorrichtung (1) nach Anspruch 4,
**dadurch gekennzeichnet, dass** das zweite Federmittel (5) zwei gegenüberliegende und zueinander gegenläufig angeordnete Schraubenfedern (5.1) umfasst.

6. Arretiervorrichtung (1) nach einem der Ansprüche 3 bis 5,
**dadurch gekennzeichnet, dass** das Verriegelungselement (2) bezüglich der unteren Trägerplatte (3.2) derart gelagert ist, dass das Verriegelungselement (2) parallel zur y-Achse (Y) fixiert ist und parallel zu einer zur y-Achse (Y) senkrecht verlaufenden x-Achse (X) zur Haltestange (7) hin- oder von der Haltestange (7) wegbewegbar ist.

7. Arretiervorrichtung (1) nach Anspruch 6,
**dadurch gekennzeichnet, dass** die obere Trägerplatte (3.1) und das Verriegelungselement (2) Mittel aufweisen, mittels derer eine auf die obere Trägerplatte (3.1) parallel zur y-Achse (Y) einwirkende Kraft (F) auf das Verriegelungselement (2) in einer Richtung parallel zur x-Achse (X) übertragbar ist.

8. Arretiervorrichtung (1) nach Anspruch 7,
**dadurch gekennzeichnet, dass** die Mittel einen abgewinkelten Abschnitt (2.1) des Verriegelungselements (2) und eine abgewinkelte Fläche (3.1.4) der oberen Trägerplatte (3.1) umfassen, wobei der abgewinkelte Abschnitt (2.1) an der abgewinkelten Fläche (3.1.4) anschlägt.

9. Kopfstütze (9) für einen Fahrzeugsitz mit einer Arretiervorrichtung (1) nach einem der vorherigen Ansprüche **dadurch gekennzeichnet, dass** die Kopfstütze (9) in einem vorgebbaren Abstand mittels der Arretiervorrichtung (1) arretierbar ist.

## Claims

1. Latching device (1) for a head restraint (9) comprising a locking element (2) displaceably mounted in a carrier device (3), said locking element being displaceable from a locked position (L) into an unlocked position (U) by means of an actuation of an actuating device (6), wherein the latching device (1) is displaceably mounted relative to a retaining rod (7), in the unlocked position (U) the locking element (2) permits a displacement of the latching device (1) relative to the retaining rod (7), in the locked position (L) the locking element (2) engages in at least one recess (7.1) of the retaining rod (7) for latching the latching device (1) relative to the retaining rod (7), and in the locked position (L) the carrier device (3) with the locking element (2) arranged therein is configured mirror-symmetrically to an xz-plane (XZ) extending perpendicularly to the carrier device (3), **characterized in that** the carrier device (3) comprises an upper carrier plate (3.1) and a lower carrier plate (3.2), which carrier plates are displaceable relative to one another and parallel to the y-axis (Y).

2. Latching device (1) according to Claim 1, **characterized in that** the actuating device (6) is arranged on the left-hand side or right-hand side of the xz-plane (XZ) along a y-axis (Y) extending perpendicularly to the xz-plane (XZ).

3. Latching device (1) according to Claim 1 or 2, **characterized in that** a first spring means (4) pretensions the locking element (2) into the locked position (L).

4. Latching device (1) according to Claim 3, **characterized in that** a second spring means (5) is provided, said second spring means pretensioning the upper carrier plate (3.1) and the lower carrier plate (3.2) into a centered position (C).

5. Latching device (1) according to Claim 4, **characterized in that** the second spring means (5) comprises two opposingly arranged helical springs (5.1) which are arranged in opposing directions relative to one another.

6. Latching device (1) according to one of Claims 3 to 5, **characterized in that** the locking element (2) is mounted relative to the lower carrier plate (3.2) such that the locking element (2) is fixed parallel to the y-axis (Y) and is moveable toward the retaining rod (7) or away from the retaining rod (7) parallel to an x-axis (X) extending perpendicularly to the y-axis (Y).

7. Latching device (1) according to Claim 6, **characterized in that** the upper carrier plate (3.1) and the locking element (2) comprise means, by means of which a force (F) acting on the upper carrier plate (3.1) parallel to the y-axis (Y) is transmittable to the locking element (2) in a direction parallel to the x-axis (X).

8. Latching device (1) according to Claim 7, **characterized in that** the means comprise an angled portion (2.1) of the locking element (2) and an angled surface (3.1.4) of the upper carrier plate (3.1), wherein the angled portion (2.1) comes into contact with the angled surface (3.1.4).

9. Head restraint (9) for a vehicle seat comprising a latching device (1) according to one of the preceding claims, **characterized in that** the head restraint (9) is latchable at a predeterminable distance by means of the latching device (1).

## Revendications

1. Dispositif de blocage (1) pour un appui-tête (9) comprenant un élément de verrouillage (2) supporté de manière déplaçable dans un dispositif de support (3), lequel peut être déplacé d'une position verrouillée (L) dans une position déverrouillée (U) au moyen d'un actionnement d'un dispositif d'actionnement (6), le dispositif de blocage (1) étant supporté de manière déplaçable par rapport à une tige de retenue (7), l'élément de verrouillage (2), dans la position déverrouillée (U), permettant un déplacement du dispositif de blocage (1) par rapport à la tige de retenue (7), l'élément de verrouillage (2), dans la position verrouillée (L) pour le blocage du dispositif de blocage (1) par rapport à la tige de retenue (7), s'engageant dans au moins un évidement (7.1) de la tige de retenue (7) et le dispositif de support (3) avec l'élément de verrouillage (2) disposé dans celui-ci, dans la position verrouillée (L), étant réalisé avec une symétrie spéculaire par rapport à un plan xz (XZ) s'étendant perpendiculairement au dispositif de support (3), **caractérisé en ce que** le dispositif de support (3) comprend une plaque de support supérieure (3.1) et une plaque de support inférieure (3.2), lesquelles sont déplaçables l'une par rapport à l'autre et parallèlement à l'axe y (Y) .

2. Dispositif de blocage (1) selon la revendication 1,
**caractérisé en ce que** le dispositif d'actionnement (6) est disposé du côté gauche ou du côté droit du plan xz (XZ), le long d'un axe y (Y) s'étendant perpendiculairement au plan xz (XZ).

3. Dispositif de blocage (1) selon la revendication 1 ou 2,
**caractérisé en ce qu'**un premier moyen de ressort (4) précontraint l'élément de verrouillage (2) dans la position verrouillée (L).

4. Dispositif de blocage (1) selon la revendication 3, **caractérisé en ce qu'**un deuxième moyen de ressort (5) est prévu, lequel précontraint la plaque de support supérieure (3.1) et la plaque de support inférieure (3.2) dans une position centrée (C).

5. Dispositif de blocage (1) selon la revendication 4, **caractérisé en ce que** le deuxième moyen de ressort (5) comprend des ressorts hélicoïdaux (5.1) opposés et disposés en sens inverse l'un par rapport à l'autre.

6. Dispositif de blocage (1) selon l'une quelconque des revendications 3 à 5,
**caractérisé en ce que** l'élément de verrouillage (2) est supporté par rapport à la plaque de support inférieure (3.2) de telle sorte que l'élément de verrouillage (2) soit fixé parallèlement à l'axe y (Y) et puisse être déplacé parallèlement à un axe x (X) s'étendant perpendiculairement à l'axe y (Y) vers la tige de retenue (7) ou à l'écart de la tige de retenue (7).

7. Dispositif de blocage (1) selon la revendication 6,
**caractérisé en ce que** la plaque de support supérieure (3.1) et l'élément de verrouillage (2) présentent des moyens à l'aide desquels une force (F) agissant sur la plaque de support supérieure (3.1) parallèlement à l'axe y (Y) peut être transmise à l'élément de verrouillage (2) dans une direction parallèle à l'axe x (X).

8. Dispositif de blocage (1) selon la revendication 7,
**caractérisé en ce que** les moyens comprennent une portion coudée (2.1) de l'élément de verrouillage (2) et une surface coudée (3.1.4) de la plaque de support supérieure (3.1), la portion coudée (2.1) butant contre la surface coudée (3.1. 4).

9. Appui-tête (9) pour un siège de véhicule comprenant un dispositif de blocage (1) selon l'une quelconque des revendications précédentes, **caractérisé en ce que** l'appui-tête (9) peut être bloqué à une distance prédéfinissable au moyen du dispositif de blocage (1).
